# EUROPÄISCHE PATENTANMELDUNG

(11) **EP 1 168 796 A1**
(43) Veröffentlichungstag der Anmeldung: **02.01.2002**
(21) Anmeldenummer: 01250217.5
(22) Anmeldetag: 15.06.2001
(51) Int. Cl.: H04M 3/56, H04Q 7/38

(54) **WAP-GRUPPENANRUF**

(30) Priorität: 20.06.2000 DE 10030189
(71) Anmelder: Mannesmann AG, 40213 Düsseldorf (DE); Siemens Aktiengesellschaft, 80506 München (DE)
(72) Erfinder: Kleier, Stephan Dr., 40545 Düsseldorf (DE); Timphus, Frank, 40233 Düsseldorf (DE); Wietfeld, Christian Dr., 14612 Falkensee (DE); Herzog, Christian, 13125 Berlin (DE)
(74) Vertreter: Meissner, Peter E., Dipl.-Ing.

(57) **Zusammenfassung**

Die Erfindung ermöglicht den Aufbau einer Telefonkonferenz zwischen mehr als zwei Teilnehmern 1, 3, 4, 5 eines Telekommunikationsnetzes 2 in einfacher ergonomischer Weise, dadurch, dass bei Beantragung einer Telefonkonferenz durch einen Teilnehmer 1 eines Telekommunikationsnetzes 2 in einer Liste gespeicherte Teilnehmer 3, 4, 5 zusammen mit dem die Telefonkonferenz beantragenden Teilnehmer 1 zu einer Telefonkonferenz über eine Bridge 8 zusammengeschaltet werden

## Beschreibung

Die Erfindung betrifft Verfahren und Vorrichtungen zum Aufbau einer Telefonkonferenz zwischen mehr als zwei Telekommunikationsteilnehmern.

Aus den Veröffentlichungen GSM-Multiparty (MPTY) Supplementary Service (ITSI): GSM 02.84 (Stage 1), GSM-Voice Group Call Service (ETSI): GSM 02.68 (Stage 1, GSM 03.68 (Stage 2)), ISDN-Telefonkonferenz (ITU-T): I 254.1 (Conference Calling), I 254.2 (Three Party Supplementary Service), MIT-ME Conference (MMC) Supplementary Service (ETSI-Standard ETS 300165) ist der sequenzielle Aufbau von Telefonverbindungen zu den Teilnehmern einer Telefonkonferenz bekannt. Hierbei werden die einzelnen Teilnehmer der Telefonkonferenz einzeln angerufen und zur Telefonkonferenzschaltung zugeschaltet.

Aufgabe der vorliegenden Erfindung ist eine ergonomische und dabei möglichst einfach und effizient realisierbare Ausbildung eines Verfahrens bzw. einer Vorrichtung zum Aufbau einer Telefonkonferenz zwischen mehr als zwei Teilnehmern. Die Aufgabe wird jeweils durch die Gegenstände der unabhängigen Ansprüche gelöst.

Die Vordefinition und Speicherung einer Gruppe von Teilnehmern in einer Liste erlaubt einen ergonomischen und effizienten Verbindungsaufbau für eine Telefonkonferenz, da der Verbindungsaufbau zu den Teilnehmern einer Liste parallel erfolgen kann. Der Verbindungsaufbau für die Telefonkonferenz kann insbesondere gemäß den folgenden zwei Ausgestaltungen der Erfindung realisiert werden:

Nach einer Ausgestaltung der Erfindung kann der Verbindungsaufbau vom die Telefonkonferenz initialisierenden Teilnehmer dadurch ausgelöst werden, dass er eine (z. B. im Telefonbuch seines Mobilfunkendgerätes oder seiner Mobilfunkteilnehmeridentifikationskarte gespeicherte) Telefonnummer anruft und ein Aufbau der Verbindungen zu den Teilnehmern der Telefonkonferenz dadurch erfolgt, dass ein Telekommunikationsnetzseitiges Element (Server) Verbindungen zu diesen in einer Liste gespeicherten Teilnehmern (unbedingt oder nach Annahme einer Einladung) aufbaut. Diese Telefonnummer kann eine keinem einzelnen Teilnehmer zugeordnete (= virtuelle) Telefonnummer sein, deren Anruf den Aufbau einer Mobilfunktelefonkonferenzverbindung durch Telekommunikations-netzseitige Elemente (Server) auslöst.

Nach einer alternativen Ausgestaltung der Erfindung erfolgt der Aufbau einer Telefonkonferenzverbindung für eine Gruppe von Teilnehmern (beispielsweise nach Anruf einer den Verbindungsaufbau auslösenden Telefonnummer) derart, dass von einem Telekommunikationsnetz-seitigen Element (Server) eine Mitteilung (beispielsweise Kurznachricht SMS-PtP oder WAP-Deck/WAP-Card) an die Teilnehmer der Liste für diese Gruppe übermittelt wird, wobei ein Aufbau einer Telekommunikationsverbindung zu einem Teilnehmer durch dessen Anwahl einer (ihm zuvor in einer Mitteilung übermittelten) Konferenz-Telefonnummer (Bridge) erfolgt.

Vorzugsweise erfolgt vor dem oder beim Verbindungsaufbau eine Anfrage an Teilnehmer, ob die Einladung zu der Konferenzschaltung angenommen wird; eine Konferenzschaltung zu einem Teilnehmer wird dann jeweils nur aufgebaut, wenn durch diesen eine Annahme der Einladung, beispielsweise durch Rücksendung eines DTMF-Signals, erfolgt ist.

Die Speicherung der Namen und/oder Telefonnummern jedes Teilnehmers einer Gruppe in einer Konferenzteilnehmer-Liste erfolgt zweckmäßig im Mobilfunkendgerät oder einer Mobilfunkteilnehmeridentifikationskarte, beispielsweise im Telefonbuch des Teilnehmers, oder alternativ für den Teilnehmer individuell seitens des Telekommunikationsnetzes.

Das Verfahren ist insbesondere zum Aufbau von Telefonkonferenzschaltungen über mindestens ein Mobilfunknetz (beispielsweise GSM, UMTS etc.) geeignet.

Vorzugsweise werden lediglich Teilnehmer in eine Konferenz-Telekommunikationsverbindung zugeschaltet, welche in der Gruppe enthalten sind. Damit wird vermieden, dass zufällig ein Mitglied der Gruppe anrufende, weitere Teilnehmer (die nicht in der Liste enthalten sind, gemäß welcher aktuell eine Konferenz aufgebaut wurde oder wird) unbeabsichtigt in eine Telefonkonferenzschaltung gelangen.

Eine erfindungsgemäße Telefonkonferenzschaltung ist insbesondere eine Sprach-Telekommunikationsverbindung (Sprach-Konferenzschaltung), kann jedoch auch eine Daten-Konferenzschaltung sein, bei welcher die Konferenz anstatt per Sprache durch alphanumerische Datenübertragung erfolgt.

Die netzseitige Implementierung kann IN-basiert erfolgen. GSM-Conference-Call-Features können realisiert werden.

Weitere Merkmale und Vorteile der Erfindung ergeben sich aus der nachfolgenden Beschreibung eines Ausführungsbeispiels. Dabei zeigt
- Fig. 1: ein unter WAP realisiertes Menü für eine auf eine erfindungsgemäße Konferenzschaltung bezogene Bildschirmdarstellung für ein Mobilfunkendgerät,
- Fig. 2: ein Untermenü zum Endgerät-seitig dargestellten Bildschirm-Menü gemäß Fig. 1,
- Fig. 3: ein Untermenü zu Fig. 2,
- Fig. 4/5: weitere Untermenüs zur Eingabe von Teilnehmern einer Gruppe in eine Liste und Abspeicherung,
- Fig. 6: ein Menü für eine erfindungsgemäße Variante eines durch ein Netzwerk initialisierten Verbindungsaufbaus,
- Fig. 7: ein Beispiel für die Darstellung auf dem Bildschirm eines Mobilfunkendgeräts eines zur Telefonkonferenz eingeladenen Teilnehmers,
- Fig. 8: schematisch einen Netzwerk-seitig initialisierte Verbindungsaufbau zu den Teilnehmern in einer Telefonkonferenz-Liste,
- Fig. 9: eine Einladung zu einem alternativen erfindungsgemäßen Aufbau einer Telefonkonferenz in Form einer Anwahl einer Telefonkonferenz-Telefonnummer durch alle eingeladenen Teilnehmer,
- Fig. 10: als Blockschaltbild grob den Aufbau einer Telefonkonferenz gemäß Figur 9.

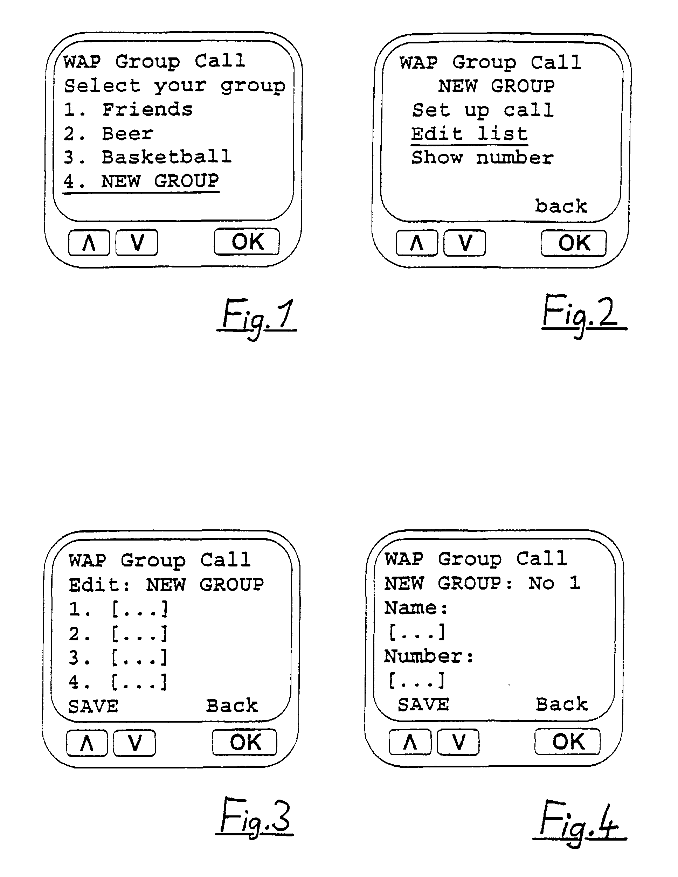

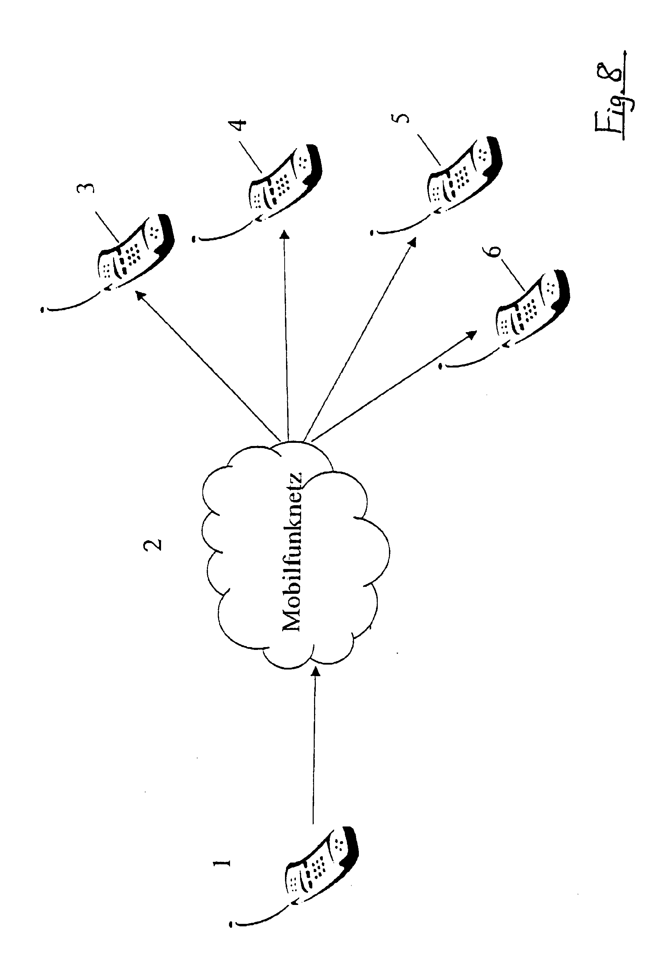

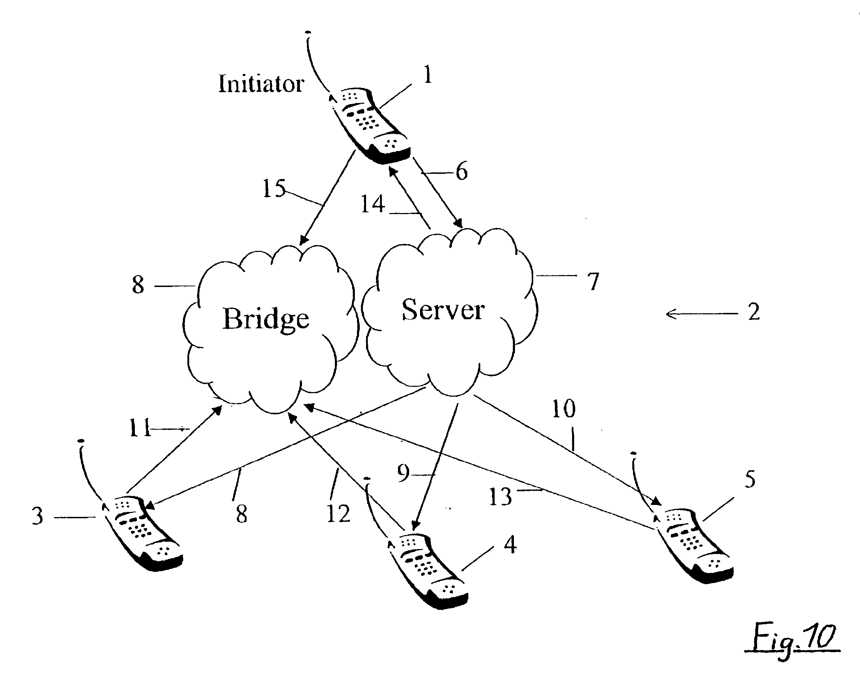

Im Folgenden werden anhand Fig. 1 - 7, 9 der Aufbau einer erfindungsgemäßen Liste von Teilnehmern einer Gruppe für eine Telefonkonferenz zwischen den Mitgliedern dieser Gruppe und darauf zwei erfindungsgemäße Ausführungsbeispiele für den Verbindungsaufbau anhand der Blockschaltbilder Fig. 8 und Fig. 10 erläutert.

Figur 1 zeigt ein Menü, wie es auf dem Bildschirm eines Mobilfunkendgerätes (MS) eines Mobilfunk-Teilnehmers dargestellt werden kann. Im vorliegenden Fall ist das Menü unter WAP (wireless application protocol) realisiert. Das dargestellte Untermenü in Fig. 1 bezieht sich auf die Anwahl einer vorhandenen Gruppe von Mitgliedern für eine Telefonkonferenz zwischen den Mitgliedern dieser Gruppe (Nr. 1 - 3) und die Definition einer neuen Gruppe von Teilnehmern durch Eingabe von Namen und/oder Telefonnummern der Teilnehmer in eine im Endgerät oder auf einer Karte oder Netz-seitig zu speichernde Liste.

Im Menü in Figur 1 kann beispielsweise eine Telefonkonferenz zu den Mitgliedern der Gruppe 1 (friends = Freunde) durch Drücken der Taste 1 am Mobilfunkendgerät, auf welchem dieses Menü dargestellt ist, (oder akustisch) ausgelöst werden. Entsprechendes gilt für die als "Beer" oder "Basketball" bezeichneten Nummern 2 und 3 des Menüs. Der Name für ein Menü kann vom Mobilfunkendgerätnutzer beliebig gewählt werden. Wenn in Fig. 1 der Punkt 4 (beispielsweise durch Drücken der Taste 4 am Mobilfunkendgerät) ausgewählt wird, wird das Menü gemäß Fig. 2 dargestellt. Neben dem Verbindungsaufbau zur neuen Gruppe (nach deren Definition) unter "set up call" (= Verbindungsaufbau) kann die neue Gruppe eingegeben werden (edit list = Liste editieren) und die Nummer der Liste angezeigt werden (show number) bei Angabe des Menüpunktes edit list in Figur 2 wird das Menü gemäß Fig. 3 angezeigt, wobei nach Anwahl beispielsweise der Nummer 1 (mit der Taste 1 am Mobilfunkendgerät) das Menü gemäß Fig. 4 angezeigt wird. Gemäß Fig. 4 können für den Teilnehmer 1 in der neuen Gruppe Name und Telefonnummer z. B. über die Tasten des Mobilfunkendgeräts eingegeben werden und nach Anwahl des Punktes "save" (= speichern) im Menü abgespeichert werden. Gemäß Fig. 4 kann nach Eingabe mindestens eines Teilnehmers (zweckmäßig mindestens zweier Teilnehmer) in eine Liste der Name der Liste angewählt werden (bisher: preset = "new group" = "neue Gruppe") und gemäß Figur 5 (save = speichern) abgespeichert werden.

Zweckmäßig wird eine Liste nur durch Eingabe von mindestens zwei Teilnehmern in eine Liste definiert.

Die technische Realisierung des Aufbaus einer Telefonkonferenz zu den in einer Liste von Teilnehmern für eine Telefonkonferenz aufgeführten Teilnehmern (bzw. deren Telefonnummern etc.) kann insbesondere dadurch realisiert werden, dass in (mindestens) einem Mobilfunknetz z. B. 10 MSISDN-Nummern (oder eine andere Anzahl) vorgegeben sind, deren Anwahl durch ein Mobilfunkendgerät den Aufbau einer Telefonkonferenzschaltung zu den Mitgliedern einer für den anrufenden Teilnehmer in einer für ihn dieser Nummer zugeordneten Liste auslöst. Dabei können auch alle z. B. 10 MSISDN-Nummern für alle Mobilfunkteilnehmer eines oder mehrerer Mobilfunknetze jeweils identisch sein, beispielsweise +49172333301 - +491723333310 für alle Teilnehmer gleichlautend. Bei Anwahl einer Liste (beispielsweise in einem Menü im Endgerät) erfolgt ein Anruf der dieser Liste zugeordneten Telefonnummer worauf das Mobilfunknetz aufgrund der Anwahl dieser Telefonnummer automatisch den Aufbau einer Telefonkonferenz zu den Mitgliedern der zu dieser Telefonnummer für den anrufenden Mobilfunkteilnehmer vorgegebenen Liste auslöst. Die Liste kann im Mobilfunknetz, im Mobilfunkendgerät oder in einer SIM-Karte gespeichert sein. Wenn die Telefonnummern einer Liste Mobilfunkendgerät-seitig (z. B. in einer Karte oder einem Endgerät) gespeichert sind, werden die anzurufenden Nummern einer Liste an das Mobilfunknetz übertragen, um von dort einen Verbindungsaufbau zu den Teilnehmern zu ermöglichen.

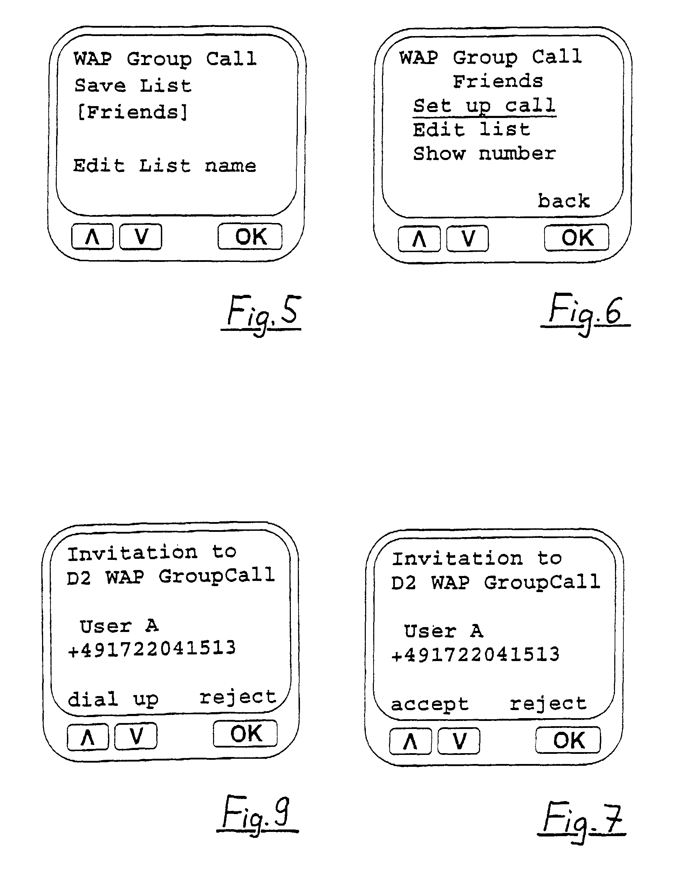

Der Verbindungsaufbau kann grundsätzlich insbesondere nach den zwei folgenden Ausführungsbeispielen realisiert werden. Bei einem Ausführungsbeispiel gemäß Fig. 6 - 8 wird der Verbindungsaufbau zu den Teilnehmern einer Liste netzseitig initialisiert (nachdem ein Mobilfunkteilnehmer durch Anruf einer o. g. virtuellen Telefonnummer etc. die Telefonkonferenz beantragt).

Wenn gemäß dem Menü in Figur 6 (set up call) eine Telefonkonferenz für die Gruppe "friends" (Freunde) von einem Mobilfunknutzer angewählt wurde, übermittelt das Mobilfunkendgerät (z. B. per SAT/WAP) die der Gruppe zugeordnete MSISDN aus dem o. g. Pool von beispielsweise 10 MSISDN an das Mobilfunknetz welches die Verbindung zu den weiteren Teilnehmern aufbaut oder aufbauen läßt. Die weiteren Teilnehmer der Telefonkonferenz (welche der Liste für diese Gruppe entnommen werden können) bekommen eine z. B. akustische und/oder alphanumerische Einladung zur Teilnahme an einer Telefonkonferenz an ihrem Mobilfunkendgerät angezeigt. Diese Einladung kann insbesondere per WAP (WML-Content, z. B. WAP-Deck oder WAP-Card) an die Mobilfunkendgeräte der eingeladenen Mobilfunkteilnehmer 3, 4, 5 übermittelt werden. Eine derartige Einladung kann beispielsweise gemäß Fig. 7 übersandt werden. Im Beispiel gemäß Fig. 7 wird mit den Cursor-Tasten die Annahme oder Ablehnung der Einladung zur Telefonkonferenz ausgewählt und durch Auswahl von "o.k." festgelegt.

Die Telefonkonferenz kann in unterschiedlicher Weise realisiert sein. Z. B. ist es möglich, dass alle Teilnehmer der Telefonkonferenz gleichzeitig sprechen und hören oder dass alternativ Prioritäten vergeben werden.

Der netzwerkinitialisierte Verbindungsaufbau zu den Teilnehmern der Liste ist in Figur 8 beispielhaft dargestellt. In Fig. 8 links ist dasjenige Mobilfunkendgerät 1 dargestellt, welches den Aufbau der Telefonkonferenz anfordert. Hierfür übermittelt es beispielsweise eine virtuelle Telefonnummer (per Mobilfunk) an das Mobilfunknetzwerk 2. Das Mobilfunknetzwerk 2 sendet (per Mobilfunk) Einladungen (gemäß Fig. 7) an die Teilnehmer 3, 4, 5, 6 der Gruppe von Mobilfunkteilnehmern, welche in der Liste gespeichert sind, für welche Liste der Teilnehmer 1 eine Telefonkonferenz beantragt hat. Wenn die Teilnehmer 3 - 6 der Liste die Einladung annehmen (oder auch ohne Einladung und automatisch), werden sie durch das Mobilfunknetzwerk 2 auf die Telefonkonferenzschaltung geschaltet.

Alternativ ist ein Teilnehmer-seitig ausgelöster Verbindungsaufbau durch jeweils einen eingeladenen Teilnehmer 3 - 6 der Liste, möglich. In diesem Falle wird eine Einladung gemäß Fig. 9 geschickt, wobei jeweils der Eingeladene dadurch an der Telefonkonferenz teilnehmen kann, dass er bzw. sein Mobilfunkendgerät eine mit der Einladung gemäß Fig. 9 übermittelte Telefonnummer (virtuelle Telefonkonferenztelefonnummer / Bridge) anwählt, worauf er auf die Telefonkonferenz geschaltet wird. Die Einladung gemäß Fig. 9 kann beispielsweise als WML-Content an ein WAP-Endgerät übermittelt werden.

Die eingeladenen Teilnehmer können über unterschiedliche Telekommunikationsidentitäten, insbesondere Telefonnummern, E-Mail-Adressen usw., kontrolliert werden.

Fig. 10 zeigt für das Auslösen des Aufbaus von Einzelverbindungen durch die einzelnen Endgeräte der Teilnehmer der Liste schematisch den Ablauf. Vom Mobilfunkendgerät 1 wird die Telefonkonferenz per Mobilfunk beantragt durch eine Telefonkonferenzinitialisierung 6 (per Mobilfunk). Hierauf schickt ein Mobilfunknetz-seitiger (2) Server 7 Einladungen 8, 9, 10 an die Mobilfunkendgeräte der Teilnehmer 3, 4, 5 der Liste für die beantragte Telefonkonferenz. Die Mobilfunkteilnehmerendgeräte 3, 4, 5 bauen, wenn deren Nutzer die Teilnahme an der Telefonkonferenz (durch einen Tastendruck etc.) wünscht, eine Verbindung zur Telefonkonferenz dadurch auf, dass sie eine (gemäß Fig. 9) mit der Einladung übermittelte (virtuelle) Telefonnummer anwählen (11, 12, 13, 14) und auf eine Telefonkonferenz geschaltet werden. Dies erfolgt über eine Brücke (Bridge) 8, über welche die an der Telefonkonferenz teilnehmenden Teilnehmer 1, 3, 4, 5 verbunden werden.

### Bezugszeichenliste

- 1: Teilnehmer
- 2: Mobilfunknetz
- 3: Teilnehmer
- 4: Teilnehmer
- 5: Teilnehmer
- 6: Telefonkonferenzinitialisierung
- 7: Server
- 8: Brücke (Bridge) / Einladung
- 9: Einladung
- 10: Einladung
- 11: Anruf einer (virtuellen) Telefonnummer
- 12: Anruf einer (virtuellen) Telefonnummer
- 13: Anruf einer (virtuellen) Telefonnummer
- 14: Anruf einer (virtuellen) Telefonnummer

## Patentansprüche

1. Verfahren zum Aufbau einer Telefonkonferenz zwischen mehr als zwei Teilnehmern (1, 3 - 5) mindestens eines Telekommunikationsnetzes (2) auf Anforderung durch einen Teilnehmer (1),
wobei bei Anforderung einer Telefonkonferenz für eine vorgegebenen Gruppe von in einer Liste (Fig. 3) für diese Gruppe gespeicherten Teilnehmern (3 - 5), die der gespeicherten Liste (Fig. 3) von Teilnehmern entnommenen Teilnehmer (3 - 5) kontaktiert werden zum Aufbau oder zur Vorbereitung eines Aufbaus einer TelefonKonferenz zwischen den Teilnehmern (1, 3, 4, 5).

2. Verfahren nach Anspruch 1
**dadurch gekennzeichnet,**
**dass** die Telefonkonferenz eine Mobilfunktelefonkonferenz ist, an welcher mindestens ein Teilnehmer (1, 3, 4, 5) über ein Mobilfunknetz teilnimmt.

3. Verfahren nach einem der vorhergehenden Ansprüche,
**dadurch gekennzeichnet,**
**dass** die Telefonkonferenz über ein Mobilfunktelefonnetz beantragt wurde.

4. Verfahren nach einem der vorhergehenden Ansprüche,
**dadurch gekennzeichnet,**
**dass** der Aufbau einer Telefonverbindung von mindestens einem Teilnehmer (1), zur Telefonkonferenz dadurch erfolgt, dass dieser Teilnehmer eine keinem anderen Teilnehmer zugeordnete Telefonnummer anruft, bei deren Anruf das Telekommunikationsnetz (2) Teilnehmer (3, 4, 5) auf die Telefonkonferenz (8) schaltet (7).

5. Verfahren nach Anspruch 4,
**dadurch gekennzeichnet,**
**dass** in mindestens einem Mobilfunktelekommunikationsnetz eine begrenzte Anzahl von Mobilfunktelefonnummern (IMSI) vorgesehen ist, bei deren Anruf durch einen beliebigen Mobilfunkteilnehmer für diesen Mobilfunkteilnehmer eine Telefonkonferenz aufgebaut wird.

6. Verfahren nach einem der Ansprüche 1 - 3,
**dadurch gekennzeichnet,**
**dass** nach Beantragung (6) einer Telefonkonferenz durch einen Teilnehmer (1) von einer mobilfunknetzseitigen (2) Einrichtung (7) eine Mitteilung an diejenigen Teilnehmer (3 - 5) gesandt (8 -10) wird, welche in der Liste enthalten sind, für welche Liste eine Telefonkonferenz beantragt wurde, wobei die Telefonnummern oder anderen Telekommunikationsidentitäten der Teilnehmer (3 - 5) einer im Mobilfunknetz (7) oder seitens des die Telefonkonferenz beantragenden Teilnehmers (1) gespeicherten Liste entnommen werden.

7. Verfahren nach einem der folgenden Ansprüche,
**dadurch gekennzeichnet,**
**dass** zur Vorbereitung des Aufbaus einer Telefonkonferenz an Teilnehmer (3 - 5) die in einer Liste gespeichert sind, eine Einladung zur Telefonkonferenz gesandt wird, wobei ein eingeladener Teilnehmer nur dann auf die Telefonkonferenz (8) geschaltet wird, wenn er die Einladung annimmt.

8. Verfahren nach Anspruch 7,
**dadurch gekennzeichnet,**
**dass** die Anfrage als Kurznachricht oder als WML-Content an das Endgerät (3 - 5) übertragen wird.

9. Verfahren nach einem der vorgenannten Ansprüche,
**dadurch gekennzeichnet,**
**dass** eine Steuerung einer Telefonkonferenz durch ein mobilfunknetzseitiges (2) Element (7) während der Telefonkonferenz hinsichtlich Beendigung der Konferenz und/oder Ausschluss eines Teilnehmers von der Konferenz und/oder Hinzuschalten eines weiteren nicht in der Liste enthaltenen Teilnehmers zur Konferenz erfolgt.

10. Verfahren nach einem der vorgenannten Ansprüche,
**dadurch gekennzeichnet,**
**dass** für die mindestens eine Gruppe jeweils eine Liste von Namen und/oder Telefonnummern und/oder anderen Telekommunikationsadressierungen nur jedes Teilnehmers der Gruppe, aber keiner weiteren Teilnehmer im Mobilfunkendgerät und/oder in einer Mobilfunkteilnehmeridentifikationskarte und/oder im Telekommunikationsnetz gespeichert ist.

11. Verfahren nach einem der vorgenannten Ansprüche,
**dadurch gekennzeichnet,**
**dass** nur Teilnehmer, die ein einer Liste für eine Gruppe gespeichert sind, zu einer Telefonkonferenz für diese Gruppe zugelassen werden.

12. Verfahren nach einem der vorgenannten Ansprüche,
**dadurch gekennzeichnet,**
**dass** eine Definition einer Liste hinsichtlich darin enthaltener Teilnehmer (3, 4, 5) per Mobilfunkinternet (WAP) und/oder Festnetz-Internet möglich ist.

13. Vorrichtung, insbesondere zur Durchführung des Verfahrens nach einem der vorhergehenden Ansprüche,
zum Aufbau einer Telefonkonferenz (8) zwischen mehr als zwei Teilnehmern (1, 3, 4, 5),
welche Vorrichtung eine Steuerungseinrichtung (7) umfasst, welche so ausgebildet ist, dass sie bei Beantragung (6) einer Telefonkonferenz (8) für eine Teilnehmergruppe durch einen Teilnehmer (1) eines Telekommunikationsnetzes (2) Teilnehmer (3, 4, 5) der vorgegebenen Gruppe von Teilnehmern (3, 4, 5), welche Teilnehmer (3, 4, 5) in einer Liste für diese Gruppe gespeichert sind, zum Aufbau oder zur Vorbereitung des Aufbaus einer Telefonkonferenz zwischen den Teilnehmern (1, 3, 4, 5) kontaktiert (8, 9, 10).

14. Vorrichtung nach Anspruch 13,
**dadurch gekennzeichnet,**
**dass** die Vorrichtung ein Server in einem oder mit Zugang zu einem Telekommunikationsnetz (2) ist.

15. Vorrichtung nach Anspruch 13 oder 14,
**dadurch gekennzeichnet,**
**dass** die Vorrichtung eine Schnittstelle für den Empfang eines Antrags (6) eines Teilnehmers (1) zum Aufbau einer Telefonkonferenz,
eine Steuerungseinrichtung (Server 7) zum Aufbau der Telefonkonferenz und
eine Schnittstelle (8) zum Verbinden von Teilnehmern (1, 3, 4, 5) miteinander als Telefonkonferenz umfasst.

16. Vorrichtung nach einem der Ansprüche 14 - 15,
**dadurch gekennzeichnet,**
**dass** nach der Vorbereitung des Aufbaus der Telefonkonferenz eine Sprach-Telefonkonferenz aufgebaut wird.

17. Vorrichtung nach Anspruch 16,
**dadurch gekennzeichnet,**
**dass** die Telefonkonferenz eine Mobilfunktelefonkonferenz ist, an welche mindestens ein Teilnehmer (1, 3, 4, 5) über ein Mobilfunknetz teilnimmt.

18. Vorrichtung nach einem der Ansprüche, 14 - 17,
**dadurch gekennzeichnet,**
**dass** der die Telefonkonferenz beantragende Teilnehmer (1) die Telefonkonferenz über ein Mobilfunktelefonnetz beantragt.

19. Vorrichtung nach einem der Ansprüche 14 - 18,
**dadurch gekennzeichnet,**
**dass** sie so aufgebaut ist, dass der Aufbau einer Telefonverbindung von mindestens einem Teilnehmer (1, 3, 4, 5) zur Telefonkonferenz dadurch erfolgt, dass dieser Teilnehmer eine keinem anderen Teilnehmer zugeordnete Telefonnummer anruft, bei deren Anruf das Telekommunikationsnetz (2) den Teilnehmer auf die Telefonkonferenz (8) schaltet (7).

20. Verfahren nach Anspruch 14 - 19,
**dadurch gekennzeichnet,**
**dass** in mindestens einem Mobilfunktelekommunikationsnetz eine begrenzte Anzahl von Mobilfunktelefonnummern (IMSI) vorgesehen ist, bei deren Anruf durch einen beliebigen Mobilfunkteilnehmer für diesen Mobilfunkteilnehmer eine Telefonkonferenz aufgebaut wird.

21. Vorrichtung nach Anspruch 14 - 20,
**dadurch gekennzeichnet,**
**dass** nach Beantragung (6) einer Telefonkonferenz durch einen Teilnehmer (1) von einer Mobilfunknetz-seitigen (2) Einrichtung (7) eine Mitteilung an diejenigen Teilnehmer (3 - 5) gesandt (8 -10) wird, welche in einer Liste enthalten sind, für welche der Teilnehmer (1) eine Telefonkonferenz beantragt, wobei die Telefonnummern oder dgl. der Teilnehmer (3 - 5) der im Mobilfunknetz (7) oder seitens des die Telefonkonferenz beantragenden Teilnehmers (1) gespeicherten Liste entnommen werden.

22. Vorrichtung nach einem der Ansprüche 14 - 21,
**dadurch gekennzeichnet,**
**dass** sie so ausgebildet ist, an einen Teilnehmer (3 - 5) aus einer Liste (Fig. 3), für welche Liste eine Telefonkonferenz beantragt (6) wird, eine Einladung zur Telefonkonferenz gesandt wird, wobei der eingeladene Teilnehmer nur dann auf die Telefonkonferenz (8) geschaltet wird, wenn er die Einladung annimmt.

23. Vorrichtung nach Anspruch 22,
**dadurch gekennzeichnet,**
**dass** die Vorrichtung so ausgebildet ist, dass die Anfrage als Kurznachricht oder als WML-Content an das Endgerät (3 - 5) übertragen wird.

24. Vorrichtung nach einem der Ansprüche 14 - 24,
**dadurch gekennzeichnet,**
**dass** eine Steuerung einer Telefonkonferenz durch ein mobilfunknetzseitiges (2) Element (7) während der Telefonkonferenz hinsichtlich Beendigung der Konferenz und/oder Ausschluss eines Teilnehmers von der Konferenz und/oder Hinzuschalten eines weiteren nicht in der Liste enthaltenen Teilnehmers zur Konferenz vorgesehen ist.

25. Vorrichtung nach einem der Ansprüche 24 - 25,
**dadurch gekennzeichnet,**
**dass** für die mindestens eine Gruppe jeweils eine Liste von Namen und/oder Telefonnummern und/oder anderen Telekommunikationsadressierungen jedes Teilnehmers der Gruppe, aber keiner weiteren Teilnehmer, im Mobilfunkendgerät und/oder in einer Mobilfunkteilnehmeridentifikationskarte und/oder im Telekommunikationsnetz in einem Speicher gespeichert ist.

26. Vorrichtung nach einem der Ansprüche 14 - 26,
**dadurch gekennzeichnet,**
**dass** sie so ausgebildet ist, dass nur Teilnehmer, die in einer Liste für eine Gruppe gespeichert sind, zu einer Telefonkonferenz für diese Gruppe zugelassen werden.

27. Vorrichtung nach einem der Ansprüche 14 - 27,
**dadurch gekennzeichnet,**
**dass** eine Definition einer Liste hinsichtlich darin enthaltener Teilnehmer (3, 4, 5) per Mobilfunkinternet (WAP) und/oder Festnetz-Internet möglich ist.
